# EUROPEAN PATENT SPECIFICATION

(11) **EP 0 814 134 B1**
(45) Date of publication and mention of the grant of the patent: **26.09.2001**
(21) Application number: 97660065.0
(22) Date of filing: 11.06.1997
(51) Int. Cl.: C09D 1/00, B05D 7/24, C04B 35/66, B22D 41/02

(54) **Coating composition and process for its application**
Überzugszusammensetzung und Verfahren zum Aufbringen derselben
Composition de revêtement et son procédé d'application

(30) Priority: 19.06.1996 FI 962564
(43) Date of publication of application: 29.12.1997
(73) Proprietor: Bet-Ker Oy, 84100 Ylivieska (FI)
(72) Inventor: Ruotanen, Kyösti, 84100 Ylivieska (FI); Alasaarela, Eija, 84100 Ylivieska (FI); Saxman, Seija, 84100 Ylivieska (FI)
(74) Representative: Partio, Erja

(56) References cited:
- EP-A- 0 047 728
- WO-A-92/09542
- WO-A-94/14727
- US-A- 4 055 437
- US-A- 4 276 091

## Description

The present invention relates to use of a dry coating composition as defined in the preamble of claim 1. Moreover, the invention relates to a procedure for applying the dry coating composition.

The purity and analytic precision of steel are subject to strict requirements; strict limit values have been set e.g. for the hydrogen content of certain steel sorts. Therefore, especially at the final stage of the steel making process, the vessels used to transport molten steel, the various sinks and intermediate tanks, must be as clean as possible and free of impurities, i.e. different kinds of slag and possible steel residue.

To protect molten steel against various impurities, especially the transport vessels used at the final end of the process are generally provided with a coating.

There are several different prior-art coating compositions intended for transport vessels used in the steel making process. These include masses applied by a wet injection technique and dry masses containing resin. In the wet procedure, the components of the coating composition are mixed with water and the mass obtained is pumped into an injector and applied onto the walls of the transport vessel. The mass can also be applied without preliminary mixing (conventional injection) or it can be applied manually by brushing. In the wet procedure, the coating is applied without using a separate mould.

EP-A-0 047 728 discloses a refractory, insulating gunning mix which is applied by wet injection technique.

A dry mass is applied to the vessel by pouring the mass into the space between a back lining and a mould. Among the commonest binders used in these dry masses are various resins, which contain hydrogen.

WO-A-92/09542 discloses a dry refractory composition and a method for the high temperature, dry application of a new refractory lining or the repair of an existing refractory lining on an interior surface of a furnace.

A problem with these prior-art coatings is that they release hydrogen into the steel. In the manufacture of certain special steel sorts, e.g. tool-making steel, the hydrogen released from the coating is sufficient to spoil the steel being produced. Moreover, when wet injection masses are used, their drying is difficult, time consuming and expensive. Furthermore, because of its large water content (25-30 %), a mass produced by a wet method cannot be applied to a hot vessel. In addition, the nozzles used in the application of a wet coating mass are prone to get blocked, which increases the need for maintenance, takes time and increases the costs.

The resin based coatings used in conventional dry procedures release hydrogen into the steel, thus deteriorating the quality of the steel. Another problem with resin based coatings is the smell caused by phenol. In addition, in dry procedures the coating mass is applied onto the object by using a mould, which has to be heated to harden the coating. Therefore, dry coating procedures require plenty of energy. On the other hand, the coating cannot be applied to a hot object because conventional coating compositions do not flow/condense between a hot backing and the mould.

The object of the present invention is to eliminate the drawbacks mentioned above.

A specific object of the invention is to present a dry coating composition for transport vessels used in the manufacture of steel which can be applied without the addition of water and which does not release hydrogen into the steel. A further object of the invention is to present an energy-efficient procedure for the application of a coating.

As for the features characteristic of the invention, reference is made to the claims.

The composition of the invention, designed for the coating of surfaces of transport vessels that come into contact with molten steel, contains hydrous inorganic salt as a binding agent. The other components of the composition are a fire resistant aggregate mixture and possible additives. The composition of the invention is applicable for the coating of transport vessels used at different stages of the handling of molten steel, various intermediate tanks, sinks, troughs etc., generally any objects where it is necessary to protect molten steel against possible impurities.

The hydrous salt used in the composition of the invention is generally a Mg, Al and/or Ca salt, preferably a sulphate or chloride salt of Mg, Al and/or Ca. Suitable salts to be used in the coating composition are e.g. epsom salt (Mg₂SO₄ · 7H₂O), aluminium sulphate (Al₂(SO₄)₃ · 14H₂O or 16 · H₂O), magnesium chloride (MgCl₂ · 6 H₂O), or calcium chloride (CaCl₂ · 6 H₂O).

The amount of binding agent contained in the composition of the invention may be 1 - 12 wt-%, preferably 2 - 6 wt-% of the mass of the composition.

The aggregate of the composition may be magnesite, dolomite, olivine, quartz or a similar fire resistant component or a mixture of these. The commonest material used as aggregate is magnesite. The amount of aggregate contained in the coating composition is 85 - 98 wt-% of the mass of the composition.

The coating composition may further contain various additives in amounts of about 0.01 - 10 wt-%, preferably 0.01 - 5 wt-%. The additives may be e.g. hardeners; substances improving the surface quality of the coating, agents facilitating the application of the composition, e.g. agents promoting flow, such as talcum, glass balls, rounded minerals and/or organic compounds, in the first place resins and sugars, which improve the strength and quality of the surface of the coating composition. Suitable sugars are e.g. fructose and/or sorbitol. Other possible additives are Na and/or Ca and/or K silicate powders, Al and/or Na and/or K and/or Ca phosphates and/or boric acid, which act as sintering additives.

The granular size of the coating composition is so adjusted that the coating composition will condense by itself, thus obviating the need to use vibration or other kinds of external compacting. Therefore, the granular size of the composition is below 3 mm, preferably below 1 mm.

In the procedure of the invention, the dry coating composition is applied onto the surface of transport vessels that come into contact with molten steel by mixing the aggregate, the inorganic hydrous salt and possible additives together and introducing the coating mass that does not release hydrogen into the steel between a mould and the object to be coated. The coating mass can be applied e.g. by blowing or transfusing. The mould used may be of a very light structure. The coating mass is heated to about 200 °C, whereupon the mould is removed. The heating can be effected by making use of the heat of the object itself. After this, the coated object, e.g. an intermediate tank, can be preheated or taken directly into use, or it can be stored to await use. Coated vessels can be taken into use either in a cold or a preheated state.

By adjusting the lining thickness and mass composition, it is possible to adjust the maximal service time of the coating composition, the casting time may be up to 24 h. Thus, the procedure of the invention is applicable for serial casting as well.

The thickness of a coating as provided by the invention is preferably at least 10 mm.

In the procedure of the invention, the object to be coated may be hot, in which case its heat can be utilized for the formation of bonding in the mass. The temperature of the object to be coated may be as high as 400 °C without the temperature having a harmful effect on the coating composition. The object to be coated may also be cold, in which case some additional heating is needed; however, the mass need not be heated to a hot temperature, but 200 °C is sufficient.

The coating composition of the invention has the advantage that it does not release any hydrogen into the steel being manufactured. The mass contains no detrimental components such as chlorine or phosphor and it contains only a small amount of carbon. The dry coating composition is applied without the addition of water, and it does not require vibration or other form of external compacting, nor does it require preliminary mixing. The granular size of the coating composition of the invention has been so adjusted that the mass will condense sufficiently by itself. The aggregate materials of the mass have been selected from fire resistant components that do not release any oxygen into the steel in the conditions where they are used. Furthermore, the coating composition withstands rapid heating without the binding agents of the coating composition drifting to the hot surface of the coating. In addition, the coating composition is very easy to use as well as cheap.

In the procedure of the invention, the dry coating composition can be applied to a very hot object without the coating composition suffering any harm and therefore the heat of the object can be utilized and no drying of the coating composition is needed. This saves both time and costs. The moulds needed in the procedure are of a very light structure, which makes them easy to handle. Further, the coating composition of the invention does not stick to the mould surface as most other conventional resin based coatings do. Moreover, the method of application can be easily automated.

The dry coating composition is user and environment friendly, for instance it involves no smell problems, unlike conventional resin based masses.

In the following, the invention is described in detail by the aid of a few examples of its embodiments.

### EXAMPLE 1

The properties of the coating composition of the invention were tested. The test was performed on a coating composition comprising:

| | |
|---|---|
| sintered magnesite 0-0.9 mm | 83.5 % |
| olivine 200 Mesh | 10.0 % |
| glass powder | 1.5 % |
| magnesium sulphate | 5.0 % |

The components were mixed together, and the volume weight, cold-moulding strength and persisting elongation of the mass obtained were determined at different temperatures. Table 1 shows the results of the tests.

**Table 1.**

| Temperature °C | Volume weight g/cm³ | Cold-moulding Strength MPa | Persisting elongation % |
|---|---|---|---|
| 200 | 1.97 | 4.6 | - |
| 1450 | 1.85 | 6.5 | + 8.5 |

As can be seen from the table, the mass obtained had a relatively high volume weight and a sufficient cold-moulding strength.

### EXAMPLE 2.

A coating composition according to the invention was prepared, containing the following components:

| | |
|---|---|
| sintered magnesite 0-0.9 mm | 93.0 % |
| glass powder | 1.5 % |
| aluminium sulphate | 5.0 % |
| boric acid | 0.5 % |

After the coating composition had been heated to 200 °C, its bonding was found to be weak but sufficient to allow it to be moved to a preheating stage. Thus, the composition of the invention is well suited for the coating of transport vessels for molten steel, which is an application requiring a composition that is sufficiently solid yet not too strong.

### EXAMPLE 3

A coating composition according to the invention containing the following components was prepared:

| | |
|---|---|
| sintered magnesite 0-0.9 mm | 93.0 % |
| glass powder | 1.5 % |
| trisodium phosphate | 5.0 % |
| boric acid | 0.5 % |

After the coating composition had been heated to 200 °C, its bonding was found to be weak but sufficient to allow it to be moved to a preheating stage.

### EXAMPLE 4

A coating composition according to the invention containing the following components was prepared:

| | |
|---|---|
| sintered magnesite 0-0.9 mm | 93.0 % |
| glass powder | 1.5 % |
| magnesium sulphate | 5.0 % |
| boric acid | 0.5 % |

The moulding strength values of this coating composition were 3.8 Mpa (200 °C) and 21.6 MPa (1450 °C). The persisting elongation was -2.6 % at 1450 °C.

The invention is not limited to the embodiment examples presented above, but many variations are possible within the framework of the inventive idea defined by the claims.

### EXAMPLE 5

The functional properties of the coating composition of the invention were tested in a steel mill by on an industrial production scale during 20.08.-23.08.1996 by coating seven intermediate tanks. The wall thickness was 40 mm.

The mass was transfused from 2m³ hoppers through a 2" rubber hose into the tank. The work on mounting the mould lasted 10 min and the transfusion of the mass 5 -10 min. The mould was kept in place for 50 - 90 min while the temperature was 80 - 110 °C.

All the tanks showed a good durability in founding use, even when the sort of steel was changed in the middle of the founding work, which is a typical occurrence in this steel mill. After the founding, the tanks could be cleaned without difficulty (the expansion scab could be easily removed).

## Claims

1. Use of a dry composition designed to be used for the coating of surfaces of transport vessels that come into contact with molten steel without the addition of water, said composition containing a fire resistant aggregate mixture, a binding agent and possibly additives, **characterized in that** the binding agent is a hydrous inorganic salt whereby the composition does not release hydrogen into the steel.

2. Use as defined in claim 1, **characterized in that** the hydrous inorganic salt is a Mg-, Al- and/or Ca- salt.

3. Use as defined in claim 1 or 2, **characterized in that** the hydrous inorganic salt is a sulphate or chloride salt of Mg, Al and/or Ca.

4. Use as defined in any one of claims 1 - 3, **characterized in that** the amount of binding agent contained in the composition is 1 - 12 wt-%, preferably 2 - 6 wt-% of the mass of the composition.

5. Use as defined in any one of claims 1 - 4, **characterized in that** the fire resistant aggregate mixture contains magnesite, dolomite, olivine, quartz or a mixture of these.

6. Use as defined in any one of claims 1 - 5, **characterized in that** the amount of aggregate mixture contained in the composition is 85 - 98 wt-% of the mass of the composition.

7. Use as defined in any one of claims 1 - 6, **characterized in that** the composition contains substances facilitating manipulation of the composition, selected from talcum, glass balls, rounded minerals.

8. Use as defined in any one of claims 1 - 7, **characterized in that** the composition contains Na/Ca/K silicate, Al/Na/K/Ca phosphate and/or boric acid.

9. Use as defined in any one of claims 1 - 8, **characterized in that** the amount of additives contained in it is 0.01 - 10 wt-%, preferably 0.01 - 5 wt-% of the mass of the composition.

10. Use as defined in any one of claims 1 - 9, **characterized in that** the granular size of the composition under 3 mm, preferably under 1 mm.

11. Procedure for applying a dry coating composition, used in the manufacture of steel, to the surface of transport vessels that come into contact with molten steel, **characterized in that** the fire resistant aggregate, the inorganic hydrous salt and possible additives are mixed together and the coating composition obtained that does not release hydrogen into the steel is applied between a mould and the object to be coated without the addition of water.

12. Procedure as defined in claim 11, **characterized in that** the mass is heated to about 200 °C and the mould is removed.

13. Procedure as defined in claim 11 or 12, **characterized in that** the object to be coated is hot.

14. Procedure as defined in claim 11 or 13, **characterized in that** the object to be coated is cold.

15. Procedure as defined in any one of claims 11 -14, **characterized in that** the coating composition is applied by blowing without using water.

16. Procedure as defined in any one of claims 11 - 15, **characterized in that** the coating composition is applied by transfusing.

17. Procedure as defined in any one of claims 11 - 16, **characterized in that** the thickness of the coating is at least 10 mm.

## Patentansprüche

1. Verwendung einer trockenen Zusammensetzung, welche für die Verwendung bei der Beschichtung von Oberflächen von Transportbehältern, die mit geschmolzenem Stahl in Kontakt kommen, ohne den Zusatz von Wasser ausgelegt ist, wobei die Zusammensetzung ein feuerbeständiges Aggregatgemisch, ein Bindemittel und möglicherweise Zusätze enthält, **dadurch gekennzeichnet, daß** das Bindemittel ein wasserhaltiges anorganisches Salz ist, wodurch die Zusammensetzung keinen Wasserstoff an den Stahl abgibt.

2. Verwendung nach Anspruch 1, **dadurch gekennzeichnet, daß** das wasserhaltige anorganische Salz ein Mg-, Al-, und/oder Ca-Salz ist.

3. Verwendung nach Anspruch 1 oder 2, **dadurch gekennzeichnet, daß** das wasserhaltige anorganische Salz ein Sulfat- oder Chloridsalz von Mg, Al, und/oder Ca ist.

4. Verwendung nach einem der Ansprüche 1 bis 3, **dadurch gekennzeichnet, daß** der Anteil des in der Zusammensetzung enthaltenen Bindemittels 1 bis 12 Gewichtsprozent, bevorzugt 2 bis 6 Gewichtsprozent der Masse der Zusammensetzung ist.

5. Verwendung nach einem der Ansprüche 1 bis 4, **dadurch gekennzeichnet, daß** das feuerbeständige Aggregatgemisch Magnesit, Dolomit, Olivin, Quarz, oder ein Gemisch von diesen enthält.

6. Verwendung nach einem der Ansprüche 1 bis 5, **dadurch gekennzeichnet, daß** der Anteil des in der Zusammensetzung enthaltenen Aggregatgemisches 85 bis 98 Gewichtsprozent, der Masse der Zusammensetzung ist.

7. Verwendung nach einem der Ansprüche 1 bis 6, **dadurch gekennzeichnet, daß** die Zusammensetzung Substanzen enthält, welche die Handhabung der Zusammensetzung erleichtern, die aus der aus Talcum, Glaskugeln, gerundeten Mineralien bestehenden Gruppe ausgewählt sind.

8. Verwendung nach einem der Ansprüche 1 bis 7, **dadurch gekennzeichnet, daß** die Zusammensetzung Na/Ca/K-Silikat; Al/Na/K/Ca-Phosphat und/oder Borsäure enthält.

9. Verwendung nach einem der Ansprüche 1 bis 8, **dadurch gekennzeichnet, daß** der Anteil der darin enthaltenen Zusätze 0,01 bis 10 Gewichtsprozent, bevorzugt 0,01 bis 5 Gewichtsprozent der Masse der Zusammensetzung ist.

10. Verwendung nach einem der Ansprüche 1 bis 9, **dadurch gekennzeichnet, daß** die Korngröße der Zusammensetzung unter 3 mm, bevorzugt unter 1 mm liegt.

11. Verfahren zur Aufbringung einer trockenen Beschichtungszusammensetzung, welche bei der Herstellung von Stahl verwendet wird, auf die Oberflächen von Transportbehältern, die mit geschmolzenem Stahl in Kontakt kommen, **dadurch gekennzeichnet, daß** das feuerbeständige Aggregat, das anorganische wasserhaltige Salz und mögliche Zusätze miteinander gemischt werden und die erhaltene Beschichtungszusammensetzung, die keinen Wasserstoff an den Stahl abgibt, zwischen einer Form und dem zu beschichtenden Objekt ohne den Zusatz von Wasser aufgebracht wird.

12. Verfahren nach Anspruch 11, **dadurch gekennzeichnet, daß** die Masse auf etwa 200°C erhitzt und die Form entfernt wird.

13. Verfahren nach Anspruch 11 oder 12, **dadurch gekennzeichnet, daß** das zu beschichtende Objekt heiß ist.

14. Verfahren nach Anspruch 11 oder 13, **dadurch gekennzeichnet, daß** das zu beschichtende Objekt kalt ist.

15. Verfahren nach einem der Ansprüche 11 bis 14, **dadurch gekennzeichnet, daß** die Beschichtungszusammensetzung durch Blasen ohne die Verwendung von Wasser aufgebracht wird.

16. Verfahren nach einem der Ansprüche 11 bis 15, **dadurch gekennzeichnet, daß** die Beschichtungszusammensetzung durch Umfüllen aufgebracht wird.

17. Verfahren nach einem der Ansprüche 11 bis 16, **dadurch gekennzeichnet, daß** die Dicke der Beschichtung mindestens 10 mm ist.

## Revendications

1. Utilisation d'une composition sèche conçue pour être utilisée en vue du revêtement des surfaces de récipients de transport qui viennent en contact avec de l'acier à l'état fondu sans addition d'eau, ladite composition contenant un mélange d'agrégat ignifuge, un agent de liaison et peut-être des additifs, **caractérisée en ce que** l'agent de liaison est un sel inorganique hydraté grâce auquel la composition ne libère pas d'hydrogène dans l'acier.

2. Utilisation selon la revendication 1, **caractérisée en ce que** le sel inorganique hydraté est un sel de Mg, Al et/ou Ca.

3. Utilisation selon la revendication 1 ou 2, **caractérisée en ce que** le sel inorganique hydraté est un sulfate ou un chlorure de Mg, Al et/ou Ca.

4. Utilisation selon l'une quelconque des revendications 1 à 3, **caractérisée en ce que** la quantité d'agent de liaison contenu dans la composition va de 1 à 12 % en poids, de préférence de 2 à 6 % en poids de la masse de la composition.

5. Utilisation selon l'une quelconque des revendications 1 à 4, **caractérisée en ce que** le mélange d'agrégat ignifuge contient de la magnésie, de la dolomite, de l'olivine, du quartz ou un de leurs mélanges.

6. Utilisation selon l'une quelconque des revendications 1 à 5, **caractérisée en ce que** la quantité de mélange d'agrégat contenu dans la composition va de 85 à 98 % en poids de la masse de la composition.

7. Utilisation selon l'une quelconque des revendications 1 à 6, **caractérisée en ce que** la composition contient des substances facilitant la manipulation de la composition, choisies parmi le talc, les billes de verre, des minéraux arrondis.

8. Utilisation selon l'une quelconque des revendications 1 à 7, **caractérisée en ce que** la composition contient du silicate de Na/Ca/K, du phosphate de Al/Na/K/Ca et/ou de l'acide borique.

9. Utilisation selon l'une quelconque des revendications 1 à 8, **caractérisée en ce que** la quantité d'additifs contenus dedans va de 0,01 à 10 % en poids, de préférence de 0,01 à 5 % en poids de la masse de la composition.

10. Utilisation selon la revendication 1 à 9, **caractérisée en ce que** la granulométrie de la composition est inférieure à 3 mm, de préférence inférieure à 1 mm.

11. Mode opératoire pour appliquer une composition de revêtement sèche, utilisée dans la fabrication de l'acier, à la surface de récipients de transport qui viennent en contact avec de l'acier à l'état fondu, **caractérisé en ce que** l'on mélange ensemble l'agrégat ignifuge, le sel hydraté inorganique et les additifs éventuels et en ce que l'on applique la composition de revêtement obtenue, qui ne libère pas d'hydrogène dans l'acier, entre un moule et l'article à revêtir sans addition d'eau.

12. Mode opératoire selon la revendication 11, **caractérisé en ce que** l'on chauffe la masse à environ 200°C et en ce que l'on enlève le moule.

13. Mode opératoire selon la revendication 11 ou 12, **caractérisé en ce que** l'article à revêtir est chaud.

14. Mode opératoire selon la revendication 11 ou 13, **caractérisé en ce que** l'article à revêtir est froid.

15. Mode opératoire selon l'une quelconque des revendications 11 à 14, **caractérisé en ce que** l'on applique la composition de revêtement par soufflage sans utiliser d'eau.

16. Mode opératoire selon l'une quelconque des revendications 11 à 15, **caractérisé en ce que** l'on applique la composition de revêtement par trans-fusion.

17. Mode opératoire selon l'une quelconque des revendications 11 à 16, **caractérisé en ce que** l'épaisseur du revêtement est d'au moins 10 mm.
